# EUROPÄISCHE PATENTANMELDUNG

(11) **EP 0 591 618 A2**
(43) Veröffentlichungstag der Anmeldung: **13.04.1994**
(21) Anmeldenummer: 93109602.8
(22) Anmeldetag: 16.06.1993
(51) Int. Cl.: G02B 6/44

(54) **Optisches Kabel**

(30) Priorität: 31.08.1992 DE 4228956
(71) Anmelder: KABEL RHEYDT Aktiengesellschaft, D-41179 Mönchengladbach (DE)
(72) Erfinder: Hög, Georg, Dipl.-Ing., D-4050 Mönchengladbach 1 (DE); Zamzow, Peter, Dipl.-Ing., D-4630 Bochum (DE); Delâge, Peter, Dipl.-Ing., D-4053 Jüchen 5 (DE)
(74) Vertreter: Mende, Eberhard, Dipl.-Ing.

(57) **Zusammenfassung**

Optisches Kabel mit einer Anzahl innerhalb begrenzender Umflächen in Kabellängsrichtung selbständig geführten, ein- oder mehrfach beschichteten optischen Fasern, bei dem die optischen Fasern (3) ganz oder teilweise durch Aufseilung auf ein Trägerelement (2) mit gleichzeitiger örtlicher Festlegung auf dessen Oberfläche vorsortiert sind.

## Beschreibung

Die vorliegende Erfindung betrifft ein optisches Kabel mit einer Anzahl innerhalb begrenzender Umflächen in Kabellängsrichtung selbständig geführten, ein- oder mehrfach beschichteten optischen Fasern.

Kabel der gattungsgemäßen Art sind seit Jahren im Bereich der Teilnehmeranschlüsse bei optischen Übertragungsnetzen im Einsatz. Bekannt sind die unterschiedlichsten Ausführungen, etwa solche, bei denen die Fasern in einem schützenden Rohr lose angeordnet sind, andere, bei denen sich eine Faser oder auch eine Mehrzahl davon in V-förmigen Nuten eines inneren Kunststoffkerns befinden, und wieder andere, bei denen die Fasern parallel nebeneinander geführt und als Flachkabel ausgebildet sind ("Optical Fiber Cables for Subscriber Loops" aus "Journal of Lightwave Technology", Vol. 7, No. 11, November 1989, Seiten 1667 - 1674). Diese bekannten Kabel haben teils den Vorteil einer hohen Packungsdichte der einzelnen Fasern in dem von den begrenzenden Umflächen des Kerns, des Bufferrohres oder dergl. gebildeten Raum, teils den Vorteil einfacher Handhabung oder der Möglichkeit, die Fertigung solcher Kabel zu erleichtern. Nachteilig bei all den bekannten Kabelkonstruktionen ist jedoch die insbesondere bei einer Vielzahl von Fasern fehlende systematische Zuordnung der Lichtwellenleiter aufgrund ihrer geometrischen Anordnung und der hierdurch bedingte hohe Montageaufwand bei der Herstellung der Teilnehmeranschlüsse.

Der Erfindung liegt daher die Aufgabe zugrunde, die gattungsgemäßen Kabel bereits fabrikmäßig so vorzubereiten, daß die Montage der Teilnehmeranschlüsse kurzzeitig und über die Orientierung der optischen Elemente sicher durchgeführt werden kann.

Diese Aufgabe wird gemäß der Erfindung dadurch gelöst, daß die optischen Fasern ganz oder teilweise durch Aufseilung auf ein Trägerelement mit gleichzeitiger örtlicher Festlegung auf dessen Oberfläche vorsortiert sind. Die gemäß der Erfindung vorgesehene Vorsortierung sichert einen einfachen Kabelaufbau, die optischen Fasern können wegen ihrer geometrischen Anordnung systematisch zugeordnet werden, jedes so hergestellte Einzelelement kann gleichzeitig als Teilnehmeranschlußleitung von dem weiterführenden Kabel zum Hausanschluß und weiter bis zum Endgerät verwendet werden. Für diesen Fall kann es dann zweckmäßig sein, um mechanische Beschädigungen von vornherein auszuschalten, das Einzelelement in ein gesondertes Schutzrohr einzuführen.

Die Möglichkeit bei dem erfindungsgemäßen Kabel, die als Einzelelemente aufgebauten Trägerelemente mit darauf fixierten optischen Fasern unmittelbar als Anschlußleitungen einzusetzen, ist in Weiterführung der Erfindung insbesondere dadurch gegeben, daß das Trägerelement aus einem hochzugfesten oder stauchfesten Kunststoffmaterial besteht. Damit ist eine sichere und kräftefreie Führung der optischen Fasern auch während der Montage sichergestellt. Werden aus montage- oder verlegungstechnischen Gründen besondere Anforderungen an die Festigkeit des Trägerelementes gestellt, dann kann man vorteilhaft für diesen Zweck auch ein glasfaserverstärktes Kunststoffmaterial einsetzen.

Die Festlegung der einzelnen Fasern, die durch Umseilung des Trägerelementes oder auch durch Aufseilung, etwa nach Art einer SZ-Verseilung, auf den Träger aufgebracht werden, kann z. B. mittels eines Heißschmelzklebers, etwa auf der Basis von Polyamid erfolgen. Eine andere Möglichkeit ist die, die optischen Fasern mittels eines UV-reaktiven Lackes, etwa auf Polymerbasis, auf der Oberfläche des Trägerelementes zu fixieren. Dabei können die einzelnen Fasern auch farblich signiert sein, ebenso besteht in bekannter Weise die Möglichkeit, durch zwei Fasern unterschiedlicher Farbgebung eine Zähl- bzw. Richtungsfaser vorzugeben.

Wesentlich für die Erfindung ist die Vorsortierung oder Zuordnung der optischen Fasern auf einem Trägerelement, das dann als Einzelelement in den Kabelaufbau problemlos eingebracht, aus diesem aber auch ebenso problemlos wieder herausgenommen und als sogenannte spleißfreie Verbindungsleitung für Anschlüsse, etwa im Ortskabelbereich, verwendet werden kann. Dabei ist die Unterbringung der erfindungsgemäßen Einzelelemente in bekannte Tragkörper oder Tragstränge mit am Umfang angeordneten Nuten oder Kammern ebenso unproblematisch wie die Einbringung einer oder mehrerer solcher Einzelelemente in die Schutzröhrchen elektrischer Kabel. Da die Handhabung der erfindungsgemäß aufgebauten Einzelelemente für die darin festgelegten optischen Fasern ohne Gefahr einer Beschädigung oder Zerstörung gewährleistet ist, können in Weiterführung der Erfindung auch die auf einem zusätzlichen Träger vorsortierten Fasern als montierbare Einzelelemente mit gleich aufgebauten Einzelelemten oder Blindelementen zu einem Seil oder Bündel zusammengefaßt werden.

Die Einfachheit des Aufbaues und die problemlose Handhabung bei der Montage, insbesondere wenn es darauf ankommt, wechselnde Entfernungen zum Teilnehmer zu überbrücken, haben im Ortskabelbereich im zunehmenden Maße zum Einsatz sogenannter Flachkabel geführt, bei denen die optische Fasern enthaltenden Adern parallel nebeneinanderlaufend geführt und entweder von einem gemeinsamen Mantel umschlossen werden oder einzeln ummantelt sind und die Verbindung untereinander durch einen ebenfalls längsverlaufenden Steg erfolgt. Diese Kabel können in Anwendung der Erfindung dadurch verbessert werden, daß die Adern solcher Flachkabel eine oder mehrere Trägerelemente enthalten, auf denen die optischen Fasern entsprechend der gewünschten räumlichen Zuordnung festgelegt sind.

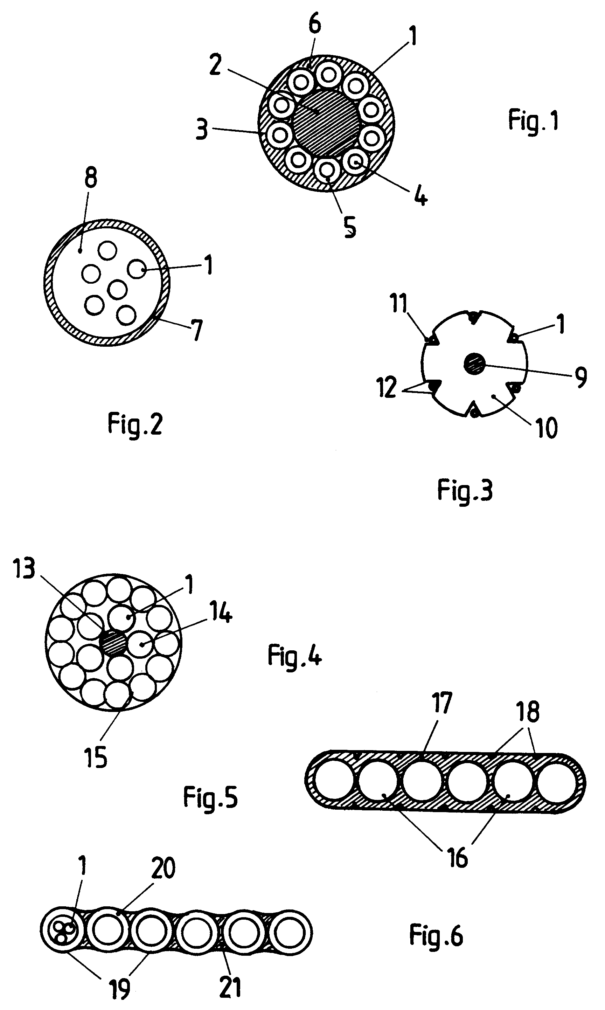

Die Erfindung sei anhand der in den Figuren 1 bis 6 dargestellten Ausführungsbeispiele näher erläutert.

Die Fig. 1 zeigt den konstruktiven Aufbau eines gemmäß der Erfindung aufgebauten Einzelelementes 1, das aus einem Trägerelement 2 besteht, beispielsweise ein langgestrecktes Profil kreisförmigen Querschnittes aus einem glasfaserverstärkten Kunststoffmaterial, und auf diese Weise einen besonders hohen Stauchschutz für die optischen Fasern 3 aufweist. Diese Fasern 3 aus einem inneren mehrschichtigen Glaskern 4 sowie einer äußeren ein- oder mehrschichtigen Umhüllung (primary coating und/oder secondary coating) sind auf das Trägerelement 2 aufgeseilt und in der gewählten räumlichen Zuordnung zueinander durch die Schicht 6 fixiert. Diese Schicht 6 kann ein Heißschmelzkleber auf der Basis von Polyamid sein, dieser Kleber ist mechanisch leicht von den Fasern zu entfernen, im aufgebrachten Zustand bildet er darüberhinaus eine Polsterschicht als Schutz der Fasern 3 vor äußerer mechanischer Beanspruchung. Der Durchmesser eines solchen Einzelelementes 1 ist äußerst gering, im gewählten Ausführungsbeispiel mit acht aufgeseilten optischen Fasern liegt der Durchmesser unter 1 mm. Trotz dieser geringen Abmessungen ist das Einzelelement extrem stabil und damit geeignet, in beliebige Kabelkonstruktionen eingebracht oder eingeseilt zu werden. Darüberhinaus können diese Einzelelemente an Abzweigstellen aus dem weiterführenden Kabel entnommen und als sogenannte Hausanschlußleitungen eingesetzt werden. Dabei kann aufgrund der speziellen Anordnung der optischen Fasern auf dem zugfesten und/oder stauchfesten Trägerelement auf aufwendige Mantelkonstruktionen zum Schutz der optischen Fasern verzichtet werden.

Die Fig. 2 zeigt ein Ausführungsbeispiel der Erfindung, bei dem die in der Fig. 1 dargestellte erfindungsgemäße Lösung mit einem äußeren Mantelrohr kombiniert ist. Zu diesem Zweck sind beispielsweise sechs Einzelelemente 1 mit dem in der Fig. 1 dargestellten identischen Aufbau in dem umgebenden Schutzrohr 7, das aus Kunststoff besteht, aber auch aus Metall hergestellt sein kann, angeordnet. Die Einzelelemente sind lose in dem Schutzrohr geführt, der Raum zwischen der inneren Wandung des Schutzrohres 7 und der Oberfläche jedes Einzelelementes 1 kann mit einer Dichtmasse gefüllt sein, die so beschaffen ist, daß die freie Bewegbarkeit der Einzelelemente 1 innerhalb des Schutzrohres 7 im Grunde erhalten bleibt.

Die Fig. 3 zeigt eine Konstruktion zur Aufnahme von optischen Fasern in Form eines einen zugfesten Kern 9 aufweisenden Sternes 10 aus einem geeigneten Kunststoffmaterial. Längsverlaufende oder auch in Längsrichtung wendelförmig bzw. mit wechselnder Schlagrichtung verlaufende Nuten 11 dienen mit ihren Umflächen 12 dem Schutz des oder der entsprechend der Fig. 1 aufgebauten Einzelelemente 1.

Eine weitere erfindungsgemäße Möglichkeit zeigt die Fig. 4, hier sind um einen zentralen Kern 13 herum verseilt Einzelelemente 1 entsprechend der Fig. 1 mit sogenannten Blindsträngen 14, sowie einer Bewehrung aus z. B. hochzugfesten Fäden oder Garnen 15. Statt einer Verseilung kann man die Einzelelemente in der Fig. 4 auch als Bündel zusammenfassen und solche Bündel dann in die Nuten 11 des sternförmigen Trägerkörpers 10 entsprechend der Fig. 3 bzw. im Innern des Schutzrohres 7 unterbringen oder, wie die Fig. 5 in einem Ausführungsbeispiel zeigt, mit einem gemeinsamen Schutzmantel umgeben, so daß eine Flachkabelkonstruktion entsteht. In der letztgenannten Fig. 5 können die parallel geführten Adern 16 aber auch lediglich Einzelelemente entsprechend der Fig. 1 sein, die von den umgebenden Flächen des gemeinsamen Mantels 17 sicher gehalten werden. Einkerbungen 18 im Mantel 17 können dazu dienen, ein Trennen der Adern zum Zwecke eines Anschlusses zu erleichtern.

Eine dem Ausführungsbeispiel entsprechend der Fig. 5 ähnliche Konstruktion eines Flachkabels zeigt die Fig. 6. Hier sind z. B. drei Einzelelemente 1 entsprechend der Fig. 1 zu einer Ader 19 zusammengefaßt, jede Ader 19 wird von einem Mantel 20 aus einem geeigneten Kunststoffmaterial umschlossen, wobei die Mäntel der einzelnen Adern untereinander durch Stege 21 beispielsweise aus dem gleichen Material wie der Mantel 20 verbunden sind. Hier dienen die Stege 21 dazu, die Trennung der Adern 19 voneinander zu erleichtern und damit den Montagevorgang bei der Herstellung von Anschlußleitungen zu verbessern.

Die in den Fig. 5 und 6 dargestellten Flachkabelkonstruktionen können selbstverständlich auch zusätzliche Zugelemente enthalten, beispielsweise können die jeweils äußersten der Adern 16 oder 19 durch zugfeste Stränge ersetzt sein.

## Patentansprüche

1. Optisches Kabel mit einer Anzahl innerhalb begrenzender Umflächen in Kabellängsrichtung selbständig geführten, ein- oder mehrfach beschichteten optischen Fasern, dadurch gekennzeichnet, daß die optischen Fasern ganz oder teilweise durch Aufseilung auf ein Trägerelement mit gleichzeitiger örtlicher Festlegung auf dessen Oberfläche vorsortiert sind.

2. Kabel nach Anspruch 1, dadurch gekennzeichnet, daß das Trägerelement aus einem hochzugfesten Kunststoff besteht.

3. Kabel nach Anspruch 1, dadurch gekennzeichnet, daß das Trägerelement aus einem stauchfesten Kunststoffmaterial besteht.

4. Kabel nach Anspruch 3, dadurch gekennzeichnet, daß das Kunststoffmaterial glasfaserverstärkt ist.

5. Kabel nach Anspruch 1 oder einem der folgenden, dadurch gekennzeichnet, daß die Fasern auf dem Trägerelement mittels eines Heißschmelzklebers fixiert sind.

6. Kabel nach Anspruch 1 oder einem der folgenden, dadurch gekennzeichnet, daß die Fasern auf dem Trägerelement mittels eines UV-reaktiven Lackes fixiert sind.

7. Kabel nach Anspruch 1 oder einem der folgenden, dadurch gekennzeichnet, daß die auf einem zusätzlichen Träger vorsortierten Fasern als montierbare Einzelelemente in den Nuten oder Kammern die Kabelseele bildenden Stützelemente angeordnet sind.

8. Kabel nach Anspruch 1 oder einem der folgenden, dadurch gekennzeichnet, daß die auf einem zusätzlichen Träger vorsortierten Fasern als montierbare Einzelelemente in im Kabelaufbau angeordneten Schutzröhrchen gelagert sind.

9. Kabel nach Anspruch 1 oder einem der folgenden, dadurch gekennzeichnet, daß die auf einem zusätzlichen Träger vorsortierten Fasern als montierbare Einzelelemente mit gleich aufgebauten Einzelelementen oder Blindelementen zu einem Seil oder Bündel zusammengefaßt sind.

10. Kabel nach Anspruch 1 oder einem der folgenden, dadurch gekennzeichnet, daß die auf einem zusätzlichen Träger vorsortierten Fasern als montierbare Einzelelemente die parallel nebeneinander geführten Adern eines Flachkabels bilden.
